# EUROPÄISCHE PATENTSCHRIFT

(11) **EP 1 389 281 B1**
(45) Veröffentlichungstag und Bekanntmachung des Hinweises auf die Patenterteilung: **08.08.2007**
(21) Anmeldenummer: 02769447.0
(22) Anmeldetag: 15.05.2002
(51) Int. Cl.: F16B 12/00, A47C 4/02, A47B 3/06, A47B 47/04

(54) **MÖBEL, INSBESONDERE STUHL ODER TISCH**
FURNISHING, IN PARTICULAR A TABLE OR CHAIR
MEUBLE, NOTAMMENT CHAISE OU TABLE

(30) Priorität: 15.05.2001 CH 888012001
(43) Veröffentlichungstag der Anmeldung: 18.02.2004
(73) Patentinhaber: Walch, Christophe, 4052 Basel (CH)
(72) Erfinder: Walch, Christophe, 4052 Basel (CH)
(74) Vertreter: Braun, André jr.
(86) Internationale Anmeldenummer: PCT/CH2002/000267
(87) Internationale Veröffentlichungsnummer: WO 2002/093023

(56) Entgegenhaltungen:
- AT-B- 391 252
- FR-A- 2 270 769
- US-A- 4 846 530
- US-A- 5 511 855

## Beschreibung

Die Erfindung betrifft ein Möbel, insbesondere einen Stuhl oder einen Tisch, aus mehreren ineinandersteckbaren Teilen, die ohne zusätzliche Verbindungsmittel in eine die gewünschte Form definierende, stabile und belastbare, relative Position zueinander gebracht werden können.

Möbelstücke, die aus ineinandersteckbaren Teilen bestehen und ihre Funktion ohne zusätzliche Verbindungsmittel, wie Leim, Schrauben, Keile etc. erfüllen, sind bekannt. Aus DE-7610412-U ist beispielsweise ein Stuhl bekannt, der aus zwei länglichen, kreuzweise ineinandersteckbaren und in zusammengestecktem Zustand Füsse, Sitz und Lehne des Stuhls bildenden Teilen besteht. Eines der beiden Teile, das im zusammengesteckten Zustand die Lehne bildet, weist einen Querschlitz auf, in welchen das Sitzteil einsteckbar ist. Durch Keilform des Sitzteils nehmen die beiden Teile im zusammengesteckten Zustand eine bestimmte Lage zueinander ein. Es ist jeweils nur eine vorgegebene Sitzhöhe und ein vorgegebener Winkel zwischen Lehne und Sitz möglich.

Aehnliche Konstruktionen sind z.B. aus US 3, 427, 074; US 3,752,532; WO 98/40633 bekannt. Allen diesen bekannten zusammensteckbaren Möbeln ist gemeinsam, dass die einzelnen Teile im zusammengesteckten Zustand eine vorgegebene relative Position zueinander einnehmen, die vom Benutzer nicht nach Wunsch verändert werden kann.

Der Erfindung liegt die Aufgabe zugrunde, bei einem aus einzelnen Teilen zusammensteckbaren Möbel grössere Flexibilität zu bieten, indem die relative Position der Teil zueinander im zusammengesteckten Zustand in einem gewissen Bereich frei variierbar ist.

Erfindungsgemäss wird dies dadurch erreicht, dass das Möbel aus drei oder mehr Teilen besteht, von denen mindestens eines schlitzförmige Ausnehmungen aufweist, durch welche sich im zusammengesteckten Zustand formentsprechende Partien der anderen Teile hindurch erstrecken, derart, dass sie im unbelasteten Zustand entlang den Ausnehmungen frei verschiebbar sind und bei Belastung oder Verkantung ihre jeweilige relative Position beibehalten.

Für den Zweck dieser Beschreibung werden unter dem Begriff "schlitzförmige Ausnehmung" auch einseitig offene Einschnitte verstanden.

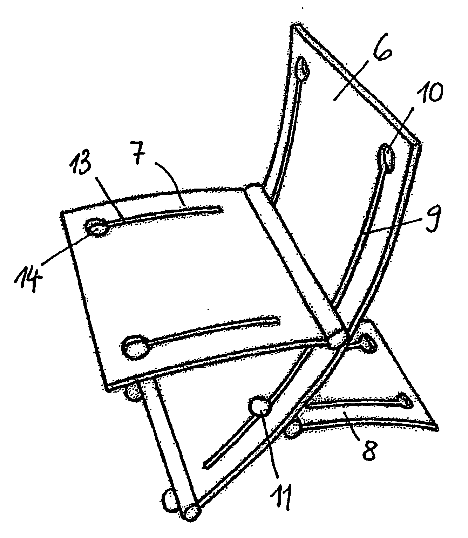

Im Folgenden werden anhand der beiliegenden Zeichnungen bevorzugte Ausführungsbeispiele der Erfindung beschrieben. Die Figure zeigt eine perspektivische Darstellung eines zusammensteckbaren Stuhls.

Der in der Figur gezeigte Stuhl ist aus drei Einzelteilen zusammengesteckt und zwar aus einem Lehnenteil 6, das auch den vorderen Fuss bildet, einem Sitzteil 7 und einem Fussteil 8, das den rückseitigen Fuss bildet. Alle drei Teile haben die Form einer leicht gekrümmten, im wesentlichen rechteckigen Platte aus formverleimtem Schichtholz oder einem anderen geeigneten Material. Das Lehnenteil ist etwa zwei- bis dreimal so lang wie breit, während Sitzteil und Fussteil, annähernd quadratisch und vorzugsweise gleich gross sind.

Das Lehnenteil ist mit zwei parallelen Längsschlitzen 9 versehen. Die Längsschlitze besitzen an einem Ende kreisförmigen Erweiterungen 10.

An den für das Zusammenstecken vorgesehenen Kanten von Sitzteil 7 und Fussteil 8 sind entsprechend dem Abstand der Schlitze 9 pilz- oder kugelförmige Knaufe 11 angebracht, deren Dicke den Erweiterungen 10 entspricht. Zum Zusammenstecken werden die Knaufe von Fussteil 8 und Sitzteil 7 durch die Erweiterungen 10 gesteckt und dann entlang den Schlitzen nach unten geschoben. Im unbelasteten Zustand ist eine Verschiebung von Sitz- und Fussteil nach Wunsch möglich.

Die in der Figur gezeigte Ausführungsform weist noch einige optionale Merkmale auf. Die Kanten, an welchen sich die Knaufe befinden, sind durch wulstförmige Verdickungen 12 verstärkt. Dadurch ist die Verankerung der Knaufe besser möglich. Sitz- und Fussteil sind wie die Lehne mit parallelen Längsschlitzen 13 und deren kreisförmigen Erweiterungen 14 und die Lehne an einer Schmalseite mit Knaufen versehen. Dadurch ergeben sich vielfältigere Möglichkeiten des Zusammensteckens.

Die Knaufe sind zweckmässigerweise mittels Gewindebolzen an den entsprechenden Kanten angebracht, so dass der Abstand zwischen den Knaufen und der Kante variiert werden kann. Dadurch lässt sich der Klemmwinkel zwischen den Teilen variieren und erwünschtenfalls eine Fixierung der Teile aneinander erreichen.

Die drei Teile, die zusammengesteckt den in der Figur gezeigten Stuhl bilden, können auf einfache Weise auch zu einem Tisch zusammengesteckt werden. Zu diesem Zweck muss nur das Sitzteil oben von der Lehne weggenommen und nach der gleichen Seite wie das Fussteil wieder aufgeschoben werden. Das Lehnenteil bildet die Tischplatte und die beiden anderen Teile die Tischfüsse.

Das hier für einen zusammensteckbaren Stuhl oder Tisch gezeigte Prinzip kann auch für andere Möbelstücke, beispielsweise Regale etc. verwendet werden. Anstelle des Sitzteils sind mehrere übereinander anzuordnende Regalbretter vorgesehen.

## Patentansprüche

1. Möbel, insbesondere Stuhl oder Tisch, aus mehreren ineinandersteckbaren Teilen (6, 7, 8) die ohne zusätzliche Verbindungsmittel in eine die gewünschte Form definierende, stabile und belastbare, relative Position zueinander gebracht werden können, **dadurch gekennzeichnet, dass** das Möbel aus mindestens drei Teilen (6,7,8) besteht, von denen mindestens eines schlitzförmige Ausnehmungen (9) aufweist, durch welche sich im zusammengesteckten Zustand formentsprechende Partien (11) der anderen Teile hindurch erstrecken, derart, dass sie im unbelasteten Zustand entlang den Ausnehmungen (9) frei verschiebbar sind und bei Belastung oder Verkantung ihre jeweilige relative Position beibehalten.

2. Möbel nach Anspruch 1, **dadurch gekennzeichnet, dass** das mit den Ausnehmungen versehene Teil länger ist als die beiden anderen und die Ausnehmungen aus zwei parallelen, mit Erweiterungen versehenen Längsschlitzen bestehen und dass die beiden anderen Teile in die Längsschlitze einsteckbare und entlang ihnen verschiebbare Knaufe aufweist.

## Claims

1. Piece of furniture, in particular a chair or table, comprising a plurality of parts (6, 7, 8) which can be inserted into one another and can be brought without additional connecting means into a stable and load-bearing position relative to one another which defines the desired shape, **characterized in that** the piece of furniture consists of at least three parts (6, 7, 8), at least one of which has slot-like recesses (9) through which, in the assembled state, appropriately shaped sections (11) of the other parts extend in such a way that, in the unloaded state, they are freely displaceable along the recesses (9) and, under load or when tilted, retain their respective relative position.

2. Piece of furniture according to Claim 1, **characterized in that** the part provided with the recesses is longer than the other two parts, and the recesses consist of two parallel longitudinal slots provided with enlargements, and **in that** the two other parts have knobs which can be inserted into the longitudinal slots and are displaceable along them.

## Revendications

1. Meuble, en particulier une chaise ou une table, composé de plusieurs parties emboîtables (6, 7, 8) les unes dans les autres, qui peuvent être assemblées sans moyens de liaison additionnels en une position relative, stable et résistante, définissant la forme souhaitée, **caractérisé en ce que** le meuble est composé d'au moins trois parties (6, 7, 8), dont au moins une partie comprend des exclusions (9) en forme de fente, à travers lesquelles s'étendent dans l'état emboîté des pièces (11) correspondantes en forme des autres parties, de telle manière qu'elles puissent être librement déplacées le long des exclusions (9) à l'état non chargé et qu'elles maintiennent à chaque fois leur position relative lors du chargement ou du calage.

2. Meuble selon la revendication 1, **caractérisé en ce que** la partie munie d'exclusions est plus longue que les deux autres parties et les exclusions se composent de deux fentes longitudinales parallèles, munies d'élargissements et **en ce que** les deux autres parties comprennent des pommeaux qui peuvent être insérés dans les fentes longitudinales et être déplacés le long de celles-ci.
